# EUROPEAN PATENT SPECIFICATION

(11) **EP 4 335 786 B1**
(45) Date of publication and mention of the grant of the patent: **31.12.2025**
(21) Application number: 23194888.6
(22) Date of filing: 01.09.2023
(51) Int. Cl.: B65G 15/02, B65G 39/16, B65G 15/64

(54) **RETAINING SYSTEM FOR A BELT OF A BELT CONVEYOR**
HALTEVORRICHTUNG FÜR EIN BAND EINES BANDFÖRDERERS
SYSTÈME DE RÉTENTION POUR UNE BANDE D'UN CONVOYEUR À BANDE

(30) Priority: 06.09.2022 IT 202200018192
(43) Date of publication of application: 13.03.2024
(73) Proprietor: F.B. Automazione S.r.l., 27010 Vellezzo Bellini PV (IT)
(72) Inventor: BOLSIERI, Fabrizio, 27010 Vellezzo Bellini PV (IT); BOLSIERI, Giampiero, 27010 Vellezzo Bellini PV (IT)
(74) Representative: Rondano, Davide

(56) References cited:
- JP-A- H0 524 622

## Description

### Technical field of the invention

The present invention relates generally to a belt conveyor, intended in particular for use in the logistics sector for transporting light loads, such as parcels, envelopes, sacks and containers. More specifically, the present invention relates to a retaining system for retaining the belt of a belt conveyor, as well as to a guide for a belt conveyor comprising said retaining system and to a belt conveyor comprising a belt and a plurality of guides.

### State of the art

Belt conveyors comprising a belt and a plurality of belt guides are known. The belt is provided with an edge member typically having a substantially circular or oval cross-section. The edge member is generally made of a plastic material and is hot-fixed or stitched to a side end of the belt. The guides comprise two retaining systems, i.e. one for each of the two branches (upper and lower branches) of the belt. Each retaining system comprises a pair of bearings that are arranged astride the belt, i.e. one above and one below the belt, and co-operate with the edge member of the belt in such a way as to allow the edge member to slide along a belt travel direction and simultaneously keep the belt tensioned. More specifically, the two bearings of each retaining system are arranged at an angle to the edge member, namely so that their respective axes of rotation form an acute angle with the belt travel plane. The angle of the bearings and the force with which they press on the edge member of the belt are parameters that vary depending on the geometry and material used for the edge member, as well as depending on other construction parameters of the belt.

JPH0524622A discloses a belt retaining system for a belt conveyor having the characteristics indicated in the preamble of the appended independent claim 1. More specifically, according to this known solution, the retaining system comprises a bearing holder which carries the upper bearing of the pair of bearings and is hinged at a lower portion thereof to a support structure of the retaining system so as to be able to rotate about a first axis of rotation parallel to the belt travel plane. The rotation of the bearing holder about this axis of rotation allows the upper bearing to shift from a closed position (or operating position), in which this bearing is in contact with the edge member of the belt and therefore performs its retaining function on this member, to an open position (or non-operating position), in which this bearing is spaced from the edge member of the belt, and vice versa. In order to keep the bearing holder in the closed position, a locking system is provided, which comprises an oscillating lever which is hinged to the support structure so that it can tilt about a second axis of rotation parallel to the aforementioned first axis of rotation, but not coincident with the latter, and which can be fixed to the bearing holder by means of a bolt. According to this known solution, therefore, in order to allow the upper bearing to shift from the closed position to the open position in case of maintenance operations on the belt conveyor, for example when it is necessary to replace the belt or its edge member, it is necessary to unscrew the bolt that restrain the oscillating lever onto the bearing holder. This operation may be more or less easy depending on the configuration of the belt conveyor on which the retaining system is mounted, but in any case it is an operation that requires a certain amount of time, especially considering that this operation must normally be carried out on a plurality of retaining systems of the belt conveyor.

### Summary of the invention

It is an object of the present invention to provide an improved retaining system with respect to the prior art discussed above, in particular a retaining system which allows easier and faster maintenance of the belt than the currently known solutions.

This and other purposes are fully achieved according to the present invention by a retaining system as defined in the appended independent claim 1.

Preferred embodiment of the retaining system according to the present invention are defined in the dependent claims, the subject-matter of which is to be understood as forming an integral part of the following description.

In summary, the invention is based on the idea of providing the retaining system with a retaining rod which at a first end thereof is hinged to an upper portion of the upper bearing holder, so as to be able to rotate with respect to the latter about a second axis of rotation parallel to the first axis of rotation about which the upper bearing holder is hinged to the support structure, and at a second end thereof opposite to the first one is in contact, when the upper bearing is in the closed position, with an abutment surface of the support structure so as to prevent the rotational movement of the upper bearing holder about the first axis of rotation in the direction from the closed position to the open position of the upper bearing, wherein the retaining rod is provided at its second end with adjustment means that allow to vary the length of the retaining rod.

Thanks to this configuration, the retaining system allows maintenance operations to be carried out on the belt conveyor very easily and quickly. In fact, in order to move the upper bearing of each retaining system from the closed position to the open position, it is sufficient to move the second end of the retaining rod away from the abutment surface of the support structure, so as to allow the rotation of the upper bearing holder in such a direction as to bring the upper bearing from the closed position to the open position. This operation can be performed manually by the operator without the need for any tools and, in any case, is a simpler and quicker operation than the operation of unscrewing a bolt that is required in the prior art discussed above.

Moreover, thanks to the adjustment means of the retaining rod, the retaining system can be adapted to edge members which differ in shape and/or size from one another. Further features of the present invention will be apparent from the following detailed description, which is given purely by way of non-limiting example.

### Brief description of the drawings

In the following detailed description of the invention, reference will be made to the accompanying drawings, in which:
- Figure 1 is a top view of a curve portion of a belt conveyor comprising a plurality of guides provided with a retaining system according to the present invention;
- Figure 2 is a side view of a guide of the belt conveyor of Figure 1;
- Figure 3 is a perspective view of the guide of Figure 2 without the belt;
- Figures 4a and 4b are side views of the upper retaining system of the guide of Figure 2, with the upper bearing of the retaining system in the closed position and in the open position, respectively; and
- Figures 5a, 5b, 5c and 5d sequentially show the steps of the operation of removal of the belt from the retaining system of Figures 4a and 4b.

### Detailed description

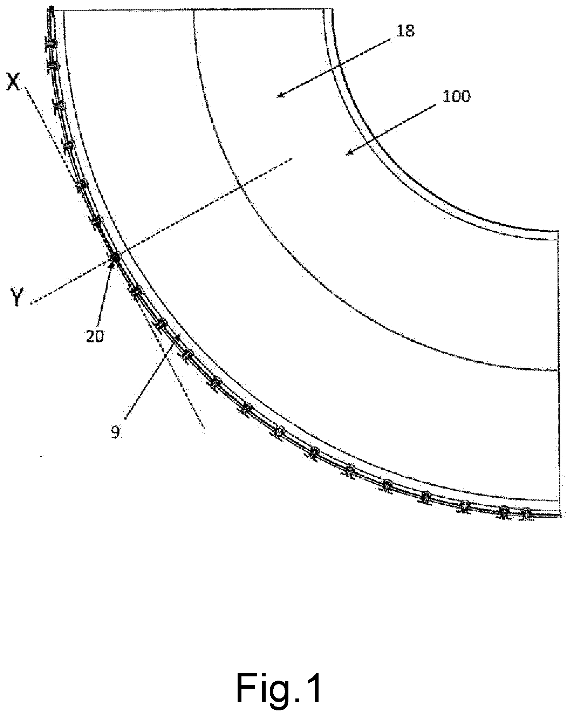

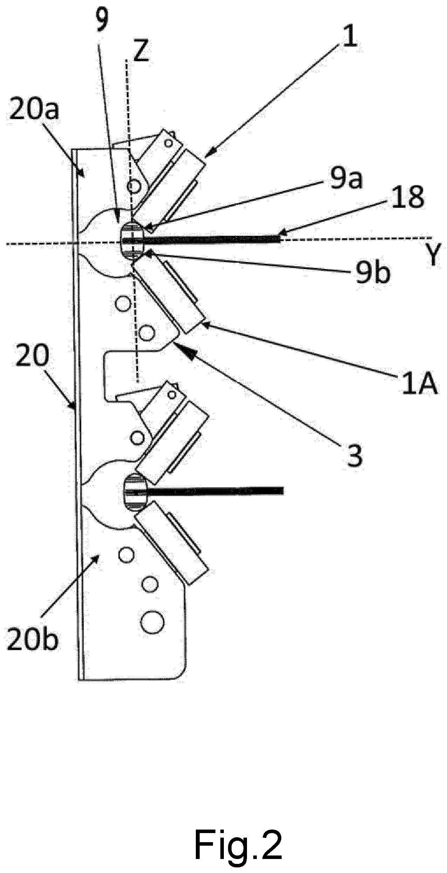

Referring first to Figure 1, it shows a curvilinear section of a belt conveyor 100 comprising a belt 18 and a plurality of guides 20 configured to retain an edge member 9 of the belt 18 so as to keep the belt tensioned and allow it to move forward. Referring now to Figure 2, the belt 18 has an upper branch, which moves on an upper travel plane, and a lower branch, which moves in the opposite direction to the upper branch on a lower travel plane parallel to the upper travel plane. The edge member 9 is a member having a thickness greater than that of the belt 18, which is fixed, for example by hot-fixing or stitching, to a side end of the belt 18. Preferably, the edge member 9 is made of a plastic material. The edge member 9 has a cross-section that is preferably of oval (as in the example proposed herein) or circular shape.

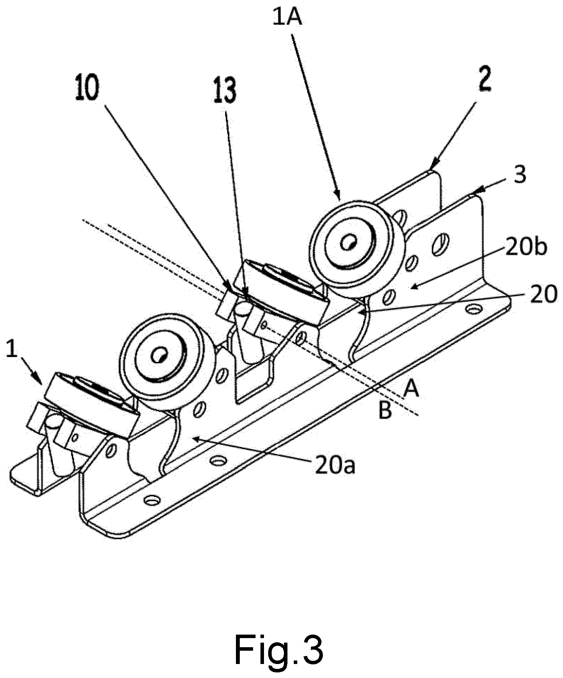

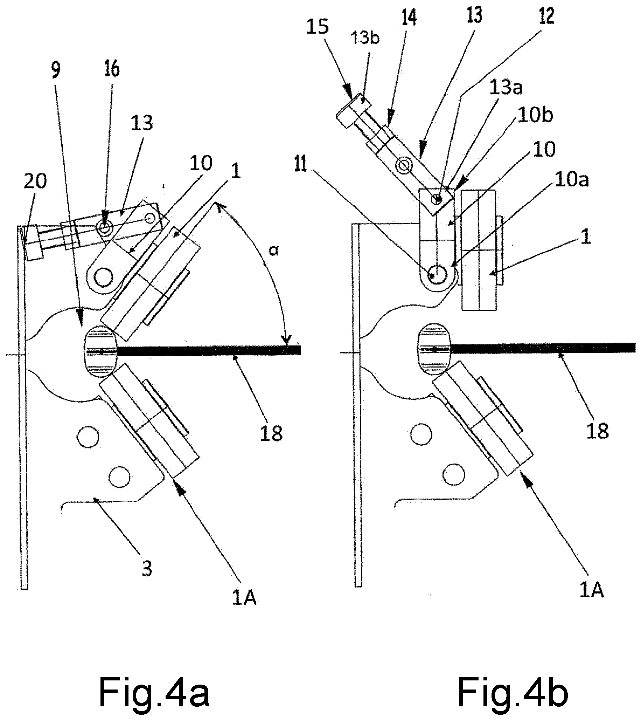

Referring also to Figures 3, 4a and 4b, each guide 20 comprises an upper retaining system 20a configured to retain the edge member 9 of the upper branch of the belt 18 and a lower retaining system 20b configured to retain the edge member 9 of the lower branch of the belt 18. The upper retaining system 20a is substantially identical to the lower retaining system 20b.

Each of the two retaining systems 20a and 20b comprises an upper bearing (or roller) 1 and a lower bearing (or roller) 1A, arranged above and below the respective branch of the belt 18 (upper branch for the upper retaining system 20a and lower branch for the lower retaining system 20b), respectively. The upper bearing 1 is freely rotatably supported on an upper bearing holder 10, while the lower bearing 1A is freely rotatably supported on a lower bearing holder (not shown, but nevertheless of a per-se-known type).

Each of the two retaining systems 20a and 20b further comprises a support structure 2, formed in particular by a pair of brackets 3 which are arranged parallel to each other on respective planes perpendicular to the travel planes of the upper and lower branches of the belt 18. Preferably, as in the embodiment illustrated herein, a single support structure 2 forming part of both the upper retaining system 20a and the lower retaining system 20b is provided.

The upper bearing holder 10 is hinged at a lower portion 10a thereof to the support structure 2, for example by means of a pin 11 inserted into a pair of aligned holes provided in the two brackets 3, so as to be able to rotate with respect to the support structure 2 about a first axis of rotation A parallel to the travel planes of the two upper and lower branches of the belt 18. The lower bearing holder, on the other hand, is rigidly connected to the support structure 2.

In the operating condition of the belt conveyor 100, the upper bearing 1 and the lower bearing 1A are arranged in contact with the edge member 9 of the respective branch of the belt 18 in such a way that their respective points of contact with the edge member 9 are arranged towards the centre of the respective branch of the belt 18 with respect to a vertical plane passing through the centreline of the edge member 9. In other words, the upper bearing 1 and the lower bearing 1A are arranged inclined at a certain angle to the travel plane of the respective branch of the belt 18.

For each retaining system 20a, 20b it is possible to define a reference system formed by a tangential axis X, which passes through the edge member 9 at the points of contact of the bearings 1, 1A with the edge member 9 and is tangent to the curve defined by the edge member 9 at the guide 20, by a centripetal axis Y, which is arranged perpendicular to the tangential axis X and lies in the travel plane of the respective branch of the belt 18, and by a vertical axis Z, which extends vertically and therefore perpendicular to the plane defined by the tangential axis X and the centripetal axis Y. The cross-section of the edge member 9 at each guide 20 is divided into four parts by the vertical axis Z and the centripetal axis Y, one part for each of the quadrants defined by these axes.

The point of contact between the upper bearing 1 and the edge member 9 lies on a surface portion 9a of the edge member 9 in the upper right quadrant (with respect to the point of view of a person looking at Figure 2) defined by the centripetal axis Y and the vertical axis Z, while the point of contact between the lower bearing 1A and the edge member 9 lies on a surface portion 9b of the edge member 9 in the lower right quadrant (with respect to the point of view of a person looking at Figure 2) defined by the centripetal axis Y and the vertical axis Z.

By virtue to such an arrangement, the bearings 1, 1A, in addition to allowing the edge member 9 to slide along the belt travel direction, are able to oppose the tensile force, directed along the centripetal axis Y, with which the belt 18 is kept tensioned.

With particular reference now to Figures 4a and 4b, due to the rotation of the upper bearing holder 10 about the axis of rotation A (rotation in a counter-clockwise direction, with respect to the point of view of a person looking at these figures), the upper bearing 1 is movable between a closed position (or operating position), shown in Figure 4a, in which the upper bearing 1, as well as the lower bearing 1A, is in contact with the edge member 9 of the belt 18, and an open position (or non-operating position), shown in Figure 4b, in which the upper bearing 1 is spaced apart from the edge member 9, so as to allow disengagement of the upper branch of the belt 18 from the retaining system 20a, for example for the purpose of replacement of the belt itself.

In order to keep the upper bearing 1 in the closed position, the retaining system 20a further comprises a retaining rod 13, which is hinged at a first end 13a thereof to an upper portion 10b of the upper bearing holder 10, for example by means of a pin 12, so as to be able to rotate with respect to the upper bearing holder 10 about a second axis of rotation B parallel to the first axis of rotation A. When the upper bearing 1 is in the closed position, a second end 13b of the retaining rod 13, opposite to the first end 13a, is in contact with an abutment surface 20 of the support structure 2 facing the belt 18, said abutment surface 20 being for example formed by a base wall joining the brackets 3. In this way, the retaining rod 13 prevents the rotational movement of the upper bearing holder 10 about the first axis of rotation A in a direction (counter-clockwise direction, with respect to the point of view of a person looking at Figures 4a and 4b) such as to bring the upper bearing 1 from the closed position to the open position. In other words, the retaining rod 13, by interposing itself between the abutment surface 20 and the upper portion 10b of the upper bearing holder 10, opposes the rotation of the upper bearing holder 10 about the first axis of rotation A which would be caused, in the absence of the retaining rod 13, by the centripetal force of the belt 18 which, via the edge member 9, acts on the upper bearing 1 (and naturally also on the lower bearing 1A), tending to make said bearing rotate from the closed position to the open position.

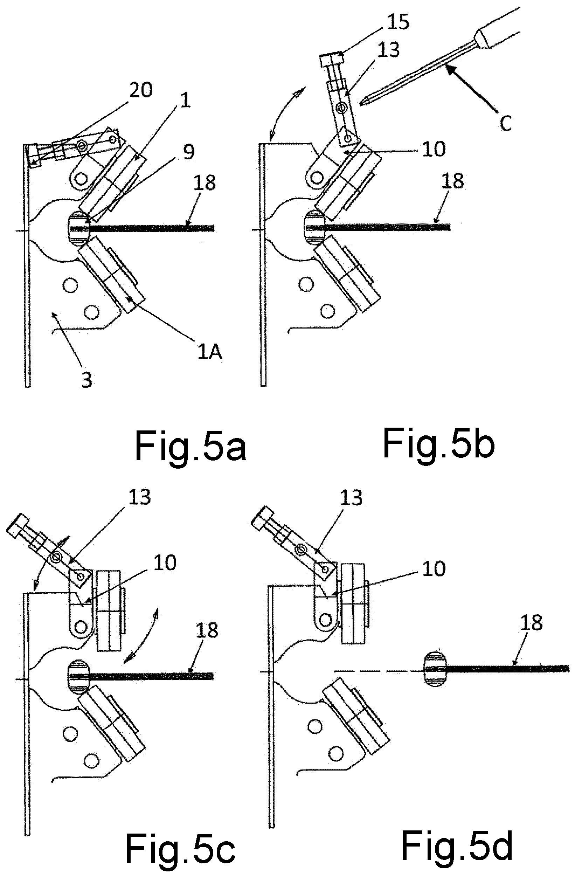

Referring to the sequence of Figures 5a to 5d, when it is necessary to disengage the edge member 9 from the retaining system, for example to replace the belt 18, it is sufficient to rotate the retaining rod 13 in the clockwise direction about the second axis of rotation B so as to disengage the second end 13b of said rod from the abutment surface 20 and thus allow the counter-clockwise rotation of the upper bearing holder 10 about the first axis of rotation A. For this purpose, it is possible, although not necessary, to use a screwdriver C or other tool as a lever, by inserting its end into an appropriate hole 16 provided in the retaining rod 13. During such operations, the upper bearing holder 10 and the retaining rod 13 remain mutually constrained by the pin 12 and, in addition, the upper bearing holder 10 remains constrained to the support structure 2 by means of the pin 11, even when the upper bearing 1 is in the open position. This avoids the risk of certain components of the retaining system being lost during belt maintenance.

According to the invention, it is possible to vary the length of the retaining rod 13 so as to suitably adjust the inclination of the upper bearing holder 10, and therefore of the upper bearing 1, with respect to the travel plane of the upper branch of the belt 18. In this regard, the second end 13b of the retaining rod 13 is for example formed by the head of a screw 15, the shank of which is screwed into a threaded hole provided in the retaining rod 13. In this way, screwing or unscrewing the screw 15 reduces or increases, respectively, the length of the retaining rod 13 (and therefore the distance between the second end 13b of the retaining rod 13 and the second axis of rotation B) and consequently increases or reduces, respectively, the angle (indicated by α) that the upper bearing 1 forms with the travel plane of the upper branch of the belt 18. Preferably, a nut 14 is used to tighten the screw 15 so as to stably maintain the desired relative position of the screw head with respect to the retaining rod 13.

As is clear from the above description, the retaining system according to the present invention allows the upper bearing to be moved quickly and easily from the operating position to the non-operating position, and vice versa.

The present invention has been described herein with reference to a preferred embodiment thereof. It is to be understood that other embodiments may be envisaged, which share the same inventive core with the one described herein, as defined by the following claims.

## Claims

1. A retaining system (20a, 20b) for retaining an edge member (9) of a belt (18) of a belt conveyor (100), said retaining system (20a, 20b) comprising:
- a support structure (2),
- an upper bearing (1) and a lower bearing (1A) which are arranged in use above and below the belt (18), respectively, astride the edge member (9), and are angled with respect to a travel plane of the belt (18) so as to retain the edge member (9) and allow it to slide along a travel direction of the belt (18),
- an upper bearing holder (10) on which the upper bearing (1) is supported so as to be freely rotatable, and
- a lower bearing holder on which the lower bearing (1A) is supported so as to be freely rotatable,
wherein the upper bearing holder (10) is hinged at a lower portion (10a) thereof to the support structure (2) for rotation about a first axis of rotation (A) parallel to said travel plane of the belt (18), so that the rotation of the upper bearing holder (10) about said first axis of rotation (A) allows the upper bearing (1) to shift between a closed position, or operating position, in which the upper bearing (1) is in contact with the edge member (9) of the belt (18), and an open position, or non-operating position, in which the upper bearing (1) is spaced apart from the edge member (9) of the belt (18), and
wherein the retaining system (20a, 20b) further comprises a retaining rod (13) configured to prevent the upper bearing holder (1) from rotating about said first axis of rotation (A), when the upper bearing (1) is in said closed position,
**characterized in that** the retaining rod (13) is hinged with a first end (13a) thereof to an upper portion (10b) of the upper bearing holder (10) so as to be rotatable with respect to the latter about a second axis of rotation (B) parallel to said first axis of rotation (A), and, with a second end (13b) opposite to said first end (13a), is configured to be in contact with an abutment surface (20) of the support structure (2), when the upper bearing (1) is in said closed position, so as to prevent the rotational movement of the upper bearing holder (10) about the first axis of rotation (A) in such a direction as to bring the upper bearing (1) from said closed position to said open position, and **in that** the retaining rod (13) is provided with adjustment means (14, 15) for varying the length of the retaining rod (13), and thus the distance between said second end (13b) of the retaining rod (13) and said second axis of rotation (B).

2. Retaining system according to claim 1, wherein said adjustment means comprise a screw (15) having a shank screwed into a threaded hole provided in the retaining rod (13) and a head forming said second end (13b) of the retaining rod (13).

3. Retaining system according to claim 1 or claim 2, wherein the support structure (2) comprises a pair of brackets (3) parallel to each other and directed substantially perpendicular to the travel plane of the belt (18), wherein the upper bearing holder (10) is hinged to the support structure (2) by means of a pin (11) inserted into a pair of aligned holes provided in the brackets (3) of the support structure (2), and wherein said abutment surface (20) is formed by a base wall of the support structure (2) joining the two brackets (3).

4. Guide (20) for a belt conveyor (100), comprising an upper portion configured to retain an edge member (9) of an upper branch of a belt (18) of the belt conveyor (100), and a lower portion configured to retain an edge member (9) of a lower branch of the belt (18) advancing in an opposite direction to the upper branch, wherein both the upper portion and the lower portion of the guide (20) comprise a retaining system (20a, 20b) according to any one of the preceding claims.

5. Belt conveyor (100) comprising a belt (18) provided with an edge member (9) and a plurality of guides (20) according to claim 4 cooperating with the edge member (9) of the belt (18).

## Patentansprüche

1. Sicherungssystem (20a, 20b) zum Sichern eines Kantenelements (9) eines Bandes (18) eines Bandförderers (100), das Sicherungssystem (20a, 20b) umfassend:
- eine Stützstruktur (2),
- ein oberes Lager (1) und ein unteres Lager (1A), die in Verwendung oberhalb beziehungsweise unterhalb des Bandes (18) angeordnet sind, gleichauf mit dem Kantenelement (9), und in Bezug auf eine Bewegungsebene des Bandes (18) geneigt sind, um das Kantenelement (9) zu sichern und ihm zu ermöglichen, entlang einer Bewegungsrichtung des Bandes (18) zu gleiten,
- einen oberen Lagerhalter (10), auf dem das obere Lager (1) gestützt ist, um frei drehbar zu sein, und
- einen unteren Lagerhalter, auf dem das untere Lager (1A) gestützt ist, um frei drehbar zu sein,
wobei der obere Lagerhalter (10) an einem unteren Abschnitt (10a) davon an der Stützstruktur (2) gelenkig befestigt ist, für eine Drehung um eine erste Drehachse (A) herum, die parallel zu der Bewegungsebene des Bandes (18) verläuft, sodass die Drehung des oberen Lagerhalters (10) um die erste Drehachse (A) herum dem oberen Lager (1) ermöglicht, zwischen einer geschlossenen Position oder Betriebsposition, in der das obere Lager (1) mit dem Kantenelement (9) des Bandes (18) in Kontakt steht, und einer offenen Position oder Nichtbetriebsposition, in der das obere Lager (1) von dem Kantenelement (9) des Bandes (18) beabstandet ist, zu wechseln und
wobei das Sicherungssystem (20a, 20b) ferner eine Sicherungsstange (13) umfasst, die konfiguriert ist, um zu verhindern, dass sich der obere Lagerhalter (1) um die erste Drehachse (A) herum dreht, wenn sich das obere Lager (1) in der geschlossenen Position befindet,
**dadurch gekennzeichnet, dass** die Sicherungsstange (13) an einem ersten Ende (13a) davon an einem oberen Abschnitt (10b) des oberen Lagerhalters (10) gelenkig befestigt ist, um in Bezug auf den Letzteren um eine zweite Drehachse (B) herum drehbar zu sein, die parallel zu der ersten Drehachse (A) ist, und, mit einem zweiten Ende (13b), das dem ersten Ende (13a) gegenüberliegt, konfiguriert ist, um an einer Anschlagoberfläche (20) der Stützstruktur (2) in Kontakt zu stehen, wenn sich das obere Lager (1) in der geschlossenen Position befindet, um die Drehbewegung des oberen Lagerhalters (10) um die erste Drehachse (A) herum in einer solchen Richtung zu verhindern, um das obere Lager (1) aus der geschlossenen Position in die offene Position zu bringen, und dass die Sicherungsstange (13) mit Einstellmitteln (14, 15) versehen ist, um die Länge der Sicherungsstange (13) und damit den Abstand zwischen dem zweiten Ende (13b) der Sicherungsstange (13) und der zweiten Drehachse (B) zu variieren.

2. Sicherungssystem nach Anspruch 1, wobei die Einstellmittel eine Schraube (15) umfassen, die einen Schaft, der in ein Gewindeloch eingeschraubt ist, das in der Sicherungsstange (13) bereitgestellt ist, und einen Kopf aufweist, der das zweite Ende (13b) der Sicherungsstange (13) ausbildet.

3. Sicherungssystem nach Anspruch 1 oder 2, wobei die Stützstruktur (2) ein Paar von Halterungen (3) umfasst, die parallel zueinander und im Wesentlichen senkrecht zu der Bewegungsebene des Bandes (18) ausgerichtet sind, wobei der obere Lagerhalter (10) an der Stützstruktur (2) mittels eines Stifts (11) gelenkig befestigt ist, der in ein Paar von ausgerichteten Löchern eingesetzt ist, die in den Halterungen (3) der Stützstruktur (2) bereitgestellt sind, und wobei die Anschlagoberfläche (20) durch eine Grundwand der Stützstruktur (2) ausgebildet wird, die die zwei Halterungen (3) verbindet.

4. Führung (20) für einen Bandförderer (100), umfassend einen oberen Abschnitt, der konfiguriert ist, um ein Kantenelement (9) eines oberen Zweigs eines Bandes (18) des Bandförderers (100) zu sichern, und einen unteren Abschnitt, der konfiguriert ist, um ein Kantenelement (9) eines unteren Zweigs des Bandes (18) zu sichern, der sich in entgegengesetzter Richtung zu dem oberen Zweig bewegt, wobei sowohl der obere Abschnitt als auch der untere Abschnitt der Führung (20) ein Sicherungssystem (20a, 20b) nach einem der vorstehenden Ansprüche umfassen.

5. Bandförderer (100), umfassend ein Band (18), das mit einem Kantenelement (9) versehen ist, und eine Vielzahl von Führungen (20) nach Anspruch 4, die mit dem Kantenelement (9) des Bandes (18) zusammenwirken.

## Revendications

1. Système de retenue (20a, 20b) permettant de retenir un élément de bord (9) d'une bande (18) d'un convoyeur à bande (100), ledit système de retenue (20a, 20b) comprenant :
- une structure de support (2),
- un palier supérieur (1) et un palier inférieur (1A) qui sont agencés en cours d'utilisation au-dessus et en dessous de la bande (18), respectivement, à cheval sur l'élément de bord (9), et forment un angle par rapport à un plan de déplacement de la bande (18) de façon à retenir l'élément de bord (9) et lui permettre de coulisser le long d'une direction de déplacement de la bande (18),
- un porte-palier supérieur (10) sur lequel le palier supérieur (1) est supporté de façon à être librement rotatif, et
- un porte-palier inférieur sur lequel le palier inférieur (1A) est supporté de façon à être librement rotatif,
dans lequel le porte-palier supérieur (10) est articulé au niveau d'une partie inférieure (10a) de celui-ci à la structure de support (2) pour une rotation autour d'un premier axe de rotation (A) parallèle audit plan de déplacement de la bande (18), de sorte que la rotation du porte-palier supérieur (10) autour dudit premier axe de rotation (A) permet au palier supérieur (1) de basculer entre une position fermée, ou position de fonctionnement, dans laquelle le palier supérieur (1) est en contact avec l'élément de bord (9) de la bande (18), et une position ouverte, position de non-fonctionnement, dans laquelle le palier supérieur (1) est espacé de l'élément de bord (9) de la bande (18), et
dans lequel le système de retenue (20a, 20b) comprend en outre une tige de retenue (13) conçue pour empêcher le porte-palier supérieur (1) d'effectuer une rotation autour dudit premier axe de rotation (A), lorsque le palier supérieur (1) est dans ladite position fermée,
**caractérisé en ce que** la tige de retenue (13) est articulée avec une première extrémité (13a) de celle-ci à une partie supérieure (10b) du porte-palier supérieur (10) de façon à être rotative par rapport à ce dernier autour d'un second axe de rotation (B) parallèle audit premier axe de rotation (A), et, avec une seconde extrémité (13b) opposée à ladite première extrémité (13a), est conçue pour être en contact avec une surface de butée (20) de la structure de support (2), lorsque le palier supérieur (1) est dans ladite position fermée, de façon à empêcher le mouvement de rotation du porte-palier supérieur (10) autour du premier axe de rotation (A) dans une direction telle qu'elle amène le palier supérieur (1) de ladite position fermée à ladite position ouverte, et **en ce que** la tige de retenue (13) est pourvue de moyens d'ajustement (14, 15) permettant de faire varier la longueur de la tige de retenue (13), et donc la distance entre ladite seconde extrémité (13b) de la tige de retenue (13) et ledit second axe de rotation (B).

2. Système de retenue selon la revendication 1, dans lequel lesdits moyens d'ajustement comprennent une vis (15) ayant une queue vissée dans un trou fileté fourni dans la tige de retenue (13) et une tête formant ladite seconde extrémité (13b) de la tige de retenue (13).

3. Système de retenue selon la revendication 1 ou la revendication 2, dans lequel la structure de support (2) comprend une paire de consoles (3) parallèles l'une à l'autre et dirigées sensiblement perpendiculaire au plan de déplacement de la bande (18), dans lequel le porte-palier supérieur (10) est articulé à la structure de support (2) au moyen d'une broche (11) insérée dans une paire de trous alignés fournis dans les consoles (3) de la structure de support (2), et dans lequel ladite surface de butée (20) est formée par une paroi de base de la structure de support (2) reliant les deux consoles (3).

4. Guide (20) destiné à un convoyeur à bande (100), comprenant une partie supérieure conçue pour retenir un élément de bord (9) d'une section supérieure d'une bande (18) du convoyeur à bande (100), et une partie inférieure conçue pour retenir un élément de bord (9) d'une section inférieure de la bande (18) avançant dans une direction opposée à la section supérieure, dans lequel l'une et l'autre de la partie supérieure et de la partie inférieure du guide (20) comprennent un système de retenue (20a, 20b) selon l'une quelconque des revendications précédentes.

5. Convoyeur à bande (100) comprenant une bande (18) pourvue d'un élément de bord (9) et d'une pluralité de guides (20) selon la revendication 4 coopérant avec l'élément de bord (9) de la bande (18).
